# EUROPEAN PATENT APPLICATION

(11) **EP 1 750 458 A1**
(43) Date of publication of application: **07.02.2007**
(21) Application number: 05016759.2
(22) Date of filing: 02.08.2005
(51) Int. Cl.: H04N 13/00

(54) **3D TV picture conversion device**

(71) Applicant: Chen, Chuan Sheng, Taipei (TW)
(72) Inventor: Chen, Chuan Sheng, Taipei (TW)
(74) Representative: Carpintero Lopez, Francisco

(57) **Abstract**

A device to convert a TV flat picture into a 3D picture is essentially comprised of image input circuit, image phase detector and image rectifier in the TV set, divider, image horizontal control circuit, output parity lateral image circuit, transmitter, and a pair of spectacles to receive parity lateral image characterized by that the flat picture formed by the image input circuit, image phase detector and image rectifier being divided by the divider into an odd image and an even image to be sent through the image horizontal control circuit and the output parity lateral image circuit and via the transmitter to the receiving spectacles to display a 3D picture to the viewer.

## Description

### BACKGROUND OF THE INVENTION

### (a) Technical Field of the Invention

The present invention is related to a 3D TV picture conversion device, and more particularly, to one that converts a single picture of a regular TV program into two sequential lateral pictures by using electronic technology to achieve 3D effects for the viewer wearing a pair of specially designed spectacles.

### (b) Description of the Prior Art:

TV pictures have been always flat and TV programs have been contents oriented The best for the TV set manufacturers could do is to improve the resolution and effect of the picture. Production of 3D movies or TV films involves technology of comparatively higher complexity and costs. Therefore, the fact is that viewers at home are prevented from enjoying the pictures of 3D movies.

### SUNINLARY OF THE INVENTION

The primary purpose of the present invention is to provide a device that converts a flat TV picture into a 3D TV picture. To achieve the purpose, the converter of the present invention is essentially comprised of image input circuit, image phase detector, image phase rectifier, divider, image horizontal control circuit and output parity lateral image circuit and a circuit transmitter, and a pair of spectacles specially design to receive the parity lateral pictures. Wherein, the divider is used to divide the TV picture formed by the image input circuit, image phase detector and image rectifier of the TV set into a parity image, in turn a 3D picture is displayed by the designated pair of spectacles through the image horizontal control circuit and output parity lateral image circuit and the circuit transmitter.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference.to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a block chart of the present invention.
FIG. 2 is a schematic view showing that a TV screen displays the parity lateral image, its transmitter and the pair of spectacles receiving the parity image.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

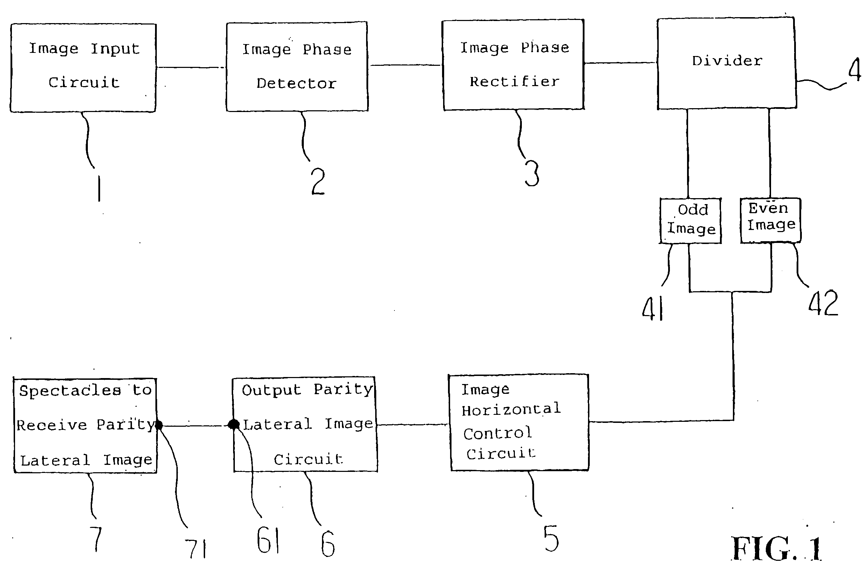

Referring to FIG. 1 for a preferred embodiment of a 3D TV picture conversion device of the present invention, the device is essentially comprised of an image input circuit 1, an image phase detector 2, an image phase rectifier 3, a divider 4, an image horizontal control circuit 5 and output parity lateral image circuit 6 and a circuit transmitter 61, a pair of spectacles 7 specially designed to receive parity lateral image and its receiver 71.

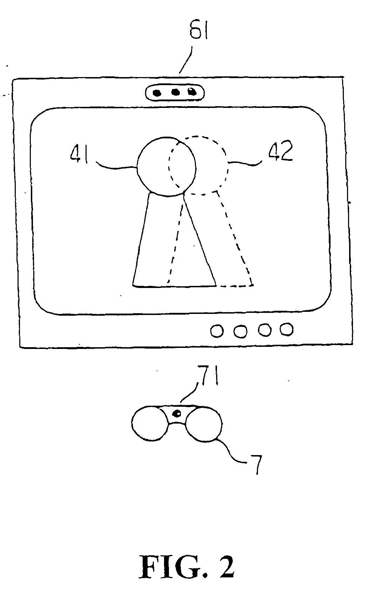

A TV picture formed by the image input circuit 1, the image phase detector 2 and the image phase rectifier 3 of the TV set is divided by the divider 4 into an odd image 41 and an even image 42 as illustrated in FIG. 2. Both images 41, 42 are then transmitted by the transmitter 61 to be received by the receiver 71 of the pair of parity lateral image receiving spectacles 7 to display a 3D picture.

A conversion key is provided on the TV set or on a remote controller. If the viewer desires to watch the 3D picture, the conversion key is pressed to convert the flat TV picture into a 3D picture.

The present invention by converting the flat TV picture into a 3D picture by using electronic circuit to convert a single TV flat picture into two sequential lateral pictures to displace a 3D picture through the receiving by a specially designed pair of spectacle is innovative, advance and practical. Therefore this application for a utility patent is duly filed accordingly.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A device to convert flat TV picture into a 3D picture, is essentially comprised of an image input circuit, an image phase detector, and an image phase rectifier in a TV set, a divider, an image horizontal control circuit, an output parity lateral image circuit, a circuit transmitter, and a pair of spectacles specially designed to receive parity lateral image **characterized by** that a TV flat image formed by the image input circuit, the image phase detector and the image rectifier being divided by the divider into an odd image and an even image, then transmitted through the transmitter to be received by the parity lateral image receiving spectacles to display a 3D picture.
